# EUROPEAN PATENT APPLICATION

(11) **EP 1 715 599 A1**
(43) Date of publication of application: **25.10.2006**
(21) Application number: 05710075.2
(22) Date of filing: 10.02.2005
(51) Int. Cl.: H04B 7/26, H04Q 7/30

(54) **METHOD FOR OPTIMIZING RADIO RESOURCE ALLOCATED TO MBMS SERVICE AND MOBILE TERMINAL FOR RECEIVING MBMS SERVICE**

(30) Priority: 11.02.2004 FR 0450241
(71) Applicant: NEC CORPORATION, Minato-ku, Tokyo 108-8001 (JP)
(72) Inventor: ROBERTS, Michael, F-92200 (FR)
(74) Representative: Betten, Jürgen
(86) International application number: PCT/JP2005/002023
(87) International publication number: WO 2005/078959

(57) **Abstract**

The process according to the present invention includes: a step for counting mobile terminals present in a geographical zone; a step for determining a first criterion representing the minimum level of reception quality attained by mobile terminals for services broadcast in geographical zones; a step for determining a second criterion representing the distance between a broadcast source and mobile terminals at which reception of broadcast services is optimal; a step for establishing connections of signal communication between a cellular telecommunication network and mobile terminals located in broadcast zones that fulfill the first and second criteria; and a step for transmitting MBMS services (multimedia broadcast/multicast services) to mobile terminals.

## Description

### Technical Field

The present invention is located in the field of telecommunication, and in particular, relates to a process for optimizing radio resources allocated to MBMS services (Multimedia Broadcast/Multicast Services) that are broadcast by a source to a group of mobile terminals located in a limited geographic zone covered by at least one cellular telecommunication network. The present invention also relates to a mobile terminal for receiving MBMS services that are broadcast by a source in a limited geographical zone covered by at least one cellular telecommunication network.

### Background Art

The development of broadband applications and the increase in the number of subscribers to cellular telecommunication networks (2.5 G, 3G, 4G) in which communication providers wish to transmit the same data at high volume call for the realization of a method of optimizing the radio resources and cellular telecommunication network resources for this transmission.

For this purpose, MBMS services for point-to-multipoint broadcast of a high-volume multimedia services to a plurality of mobile terminals located within a limited zone covered by a cellular telecommunication network have been established in the technical specifications TS 22.146 V5.2.0 of the 3GPP (Third-Generation Partnership Project) Group.

In addition, a CBS (Cell Broadcast Service) that is capable of transmitting data through a common broadcast channel to all subscribers located within a collection of cells of a cellular telecommunication network is described in the technical specifications TS 23.041 "Technical Realization of Cell Broadcast Service (CBS)" of the 3GPP Group.

These services are realized at low volume and are therefore not compatible with the high-volume digital flow broadcasts such as for audio and/or video services.

Similarly, an IP multicast service is known by which the mobile terminals of subscribers can receive datagrams that are transmitted by way of the Internet. By means of this service, subscribers are not able to share radio resources or cellular telecommunication network resources and therefore are unable to optimize the use of the resources required for the distribution of datagrams within a cellular telecommunication network.

It is an object of the present invention to enable a plurality of users to simultaneously receive identical data and service at high volume by way of a common channel to avoid congestion of cellular telecommunication network due to a plurality of continuous transmissions.

Non-Patent Document 1: 3GPP Group Technical Specification TS 22.146 V5.2.0

Non-Patent Document 2: 3GPP Group Technical Specification TS 23.041 (Technical Realization of Cell Broadcast Service (CBS)

### Disclosure of the Invention

The present invention recommends a process of optimizing for radio resources allocated to an MBMS (Multimedia Broadcast/Multicast Service) broadcast by a single source to a group of mobile terminals located in a limited geographical zone that is covered by at least one cellular telecommunication network.

The process according to the present invention includes steps of:
counting mobile terminals present in the geographic zone;
defining a first criterion representing a minimum level of reception quality by the mobile terminals of the service that is broadcast in the geographic zone;
defining a second criterion representing the distance between the broadcast source and the mobile terminals for which the reception of the broadcast service is optimal;
establishing a signalization connection between the cellular telecommunication network and mobile terminals located in a broadcast zone that fulfill the first and second criteria; and
transmitting the MBMS service to the mobile terminals. By means of this process, radio resources and cellular telecommunication network resources that are necessary for the broadcast of an MBMS service are shared only among mobile terminals present within a target broadcast zone that use satisfactory radio lines.

In addition, based on the presence of a specific mobile terminal at the border of a cell, the cellular telecommunication network is able to use information that is obtained by the steps of a process to rate the actual number of mobile terminals located in a cell.

Thus, the present invention allows evaluation of a coefficient relating to the nature of the cell, the distribution of mobile terminals in the cell, and in some cases, the number of mobile terminals actually present in the cell according to the time period of the day.

As a result, the cellular telecommunication network can determine whether the point-to-multipoint lines are satisfactory according to the presence of a small number of mobile terminals that have established RRC connections.

According to the characteristics of the present invention, the signalization connections are used to count the mobile terminals of a broadcast zone.

The count of the mobile terminals is preferably carried out based on a probability function.

In a preferable embodiment, this process includes steps of:
fixing the percentage of mobile terminals that should receive the MBMS service;
broadcasting signals having a determined power level;
determining the percentage of mobile terminals that respond to signals that have been broadcast;
as long as the fixed percentage has not been reached, reducing the emission power level; and
if the fixed percentage has been reached, broadcasting the MBMS service at the emission power level that has been reached.

By means of these steps, the broadcast power is adapted in stages to the number of mobile terminals located in a broadcast zone and the area of the zone.

In an adaptation that is characteristic of the process according to the present invention, the cellular telecommunication network is a UMTS network.

In this case, the first criterion that represents the minimum level of the reception quality is determined according to a parameter that indicates the minimum level of received signal code power (RSCP) measured by code after allocation to, for example, a CPICH (common pilot channel) that represents the common identification signal that mobile terminals use for evaluating the impulse response of the broadcast channel, or a PCCPCH common channel (primary common control physical channel) of downlinks that relate to the transfer BCH (Broadcast Channel) common channel that is used in downlink lines for the transfer of system information that is broadcast in a cell.

In another modification, the first criterion that represents the minimum level of reception quality is determined according to the signal-to-noise ratio Ec/N0 that is indicated by the cellular telecommunication network to mobile terminals.

This process is further adapted within GSM (Global System for Mobile Communications)/GPRS (General Packet Radio Service). In this case, the first criterion that represents the minimum level of reception quality is determined according to a reception parameter (RX lev GSM) that is defined within the GSM Standards.

Mobile terminals according to the present invention have means for establishing connections with the cellular telecommunication network in the following cases:
a case in which the reception quality level is below the minimum level defined by the cellular telecommunication network for the zone; and
a case in which the distance between the mobile terminal and the broadcast source is greater than a distance established in advance by the cellular telecommunication network.

According to another modification, a mobile terminal according to the present invention establishes a connection with the cellular telecommunication network when the signal-to-noise Ec/N0 is lower than a level that has been set in advance by the cellular telecommunication network, or when the minimum level of the reception power is lower than a preset value.

Other characteristics and advantages of the present invention will become clear from the following explanation of the details of the present invention as a non-limiting example with reference to the accompanying drawings.

### Brief Description of the Drawings

FiG. 1 is a schematic view of a broadcast network in which multimedia services are offered by way of a UMTS (Universal Mobile Telecommunication Systems) network according to 3GPP technical specifications;
FIG. 2 is a schematic view of a point-to-multipoint distribution network in which multimedia services are offered by way of a UMTS network according to 3GPP technical specifications; and
FIG. 3 is a schematic view of a preferable embodiment of the process according to the present invention.

### Best Mode for Carrying Out the Invention

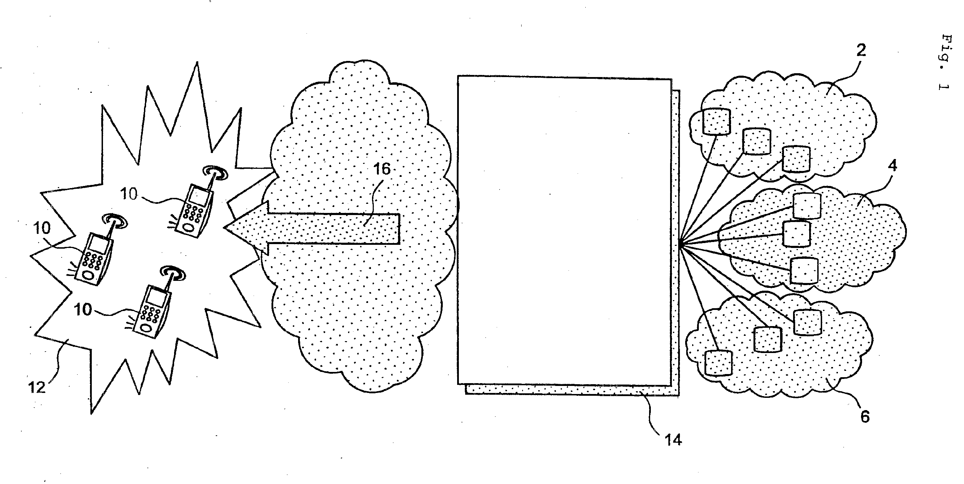

The broadcast network of FIG. 1 includes first collection 2 of servers of multimedia services, second collection 4 of servers of services that are characteristic of communication providers, and third collection 6 of servers of multimedia services that can be acquired in Internet networks.

First collection 2, second collection 4, and third collection 6 of servers offer multimedia services (text, audio, image, video) to the collection of mobile terminals 10 located in broadcast zone 12 by way of UMTS network 14.

In this network, multimedia data are broadcast through common channel 16 to the collection of mobile terminals 10 in one session or a plurality of continuous sessions.

One example of a service transmitted by this method is a welcome message to a network, a user being able to activate reception of this message, or being able to return to a state in which reception is not activated. This broadcast method is not provided with an activation procedure that is carried out by a subscriber. To receive the broadcast service, there is no need at all to be a subscriber.

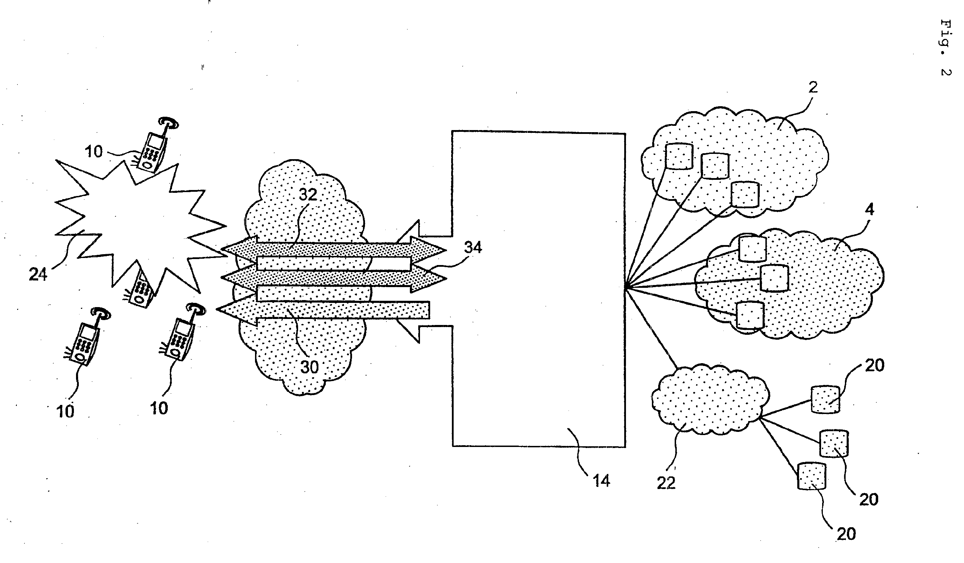

The multipoint (multicast) broadcast network of FIG. 2 includes first collection 2 of servers of multimedia services, second collection 4 of servers of services characteristic to a communication provider, and third collection 20 of servers that broadcast multimedia services through IP network 22.

First collection 2, second collection 4, and third collection 20 of servers selectively offer multimedia services (text, audio, images, video) by way of UMTS network 14 to predetermined groups of mobile terminals 10 located in one or a plurality of cells of zone 24 that is covered by a cellular telecommunication network.

One example of a service that uses multipoint system is the broadcasting of the results of sports events. In contrast to the broadcast system of FIG. 1, the multipoint (multicast) system requires subscription to services that are broadcast. These services are transmitted to mobile terminals 10 by way of shared channel 30 and require synchronization step 32 and activation step 34 carried out by a user.

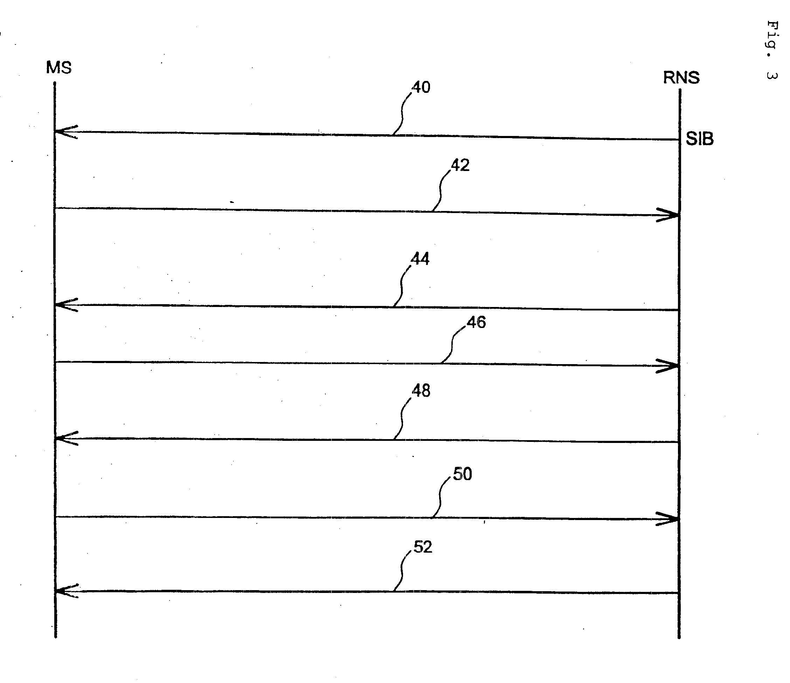

FIG. 3 is a schematic representation of an example of a working example of the process in the multicast system in a UMTS network.

In this example, an MS (mobile station) exchanges, with an RNS (radio network subsystem) module that manages the allocation of radio resources, signal communication for establishing RRC (radio resource control) connections so that the network can count the mobile terminals located in a broadcast zone.

In Step 40, the RNS transmits to the MS an SIB message (a System Information Block message) that includes the first criterion representing the minimum level of reception quality, the second criterion representing the distance between the source and the mobile terminal for which the reception of services that are broadcast is optimal, and a probability criteria for counting mobile terminals. The first and second criteria are defined according to the minimum level of the received signal code power (RSCP) measured by code following allocation or according to signal-to-noise ratio Ec/N0 that has been determined by the network.

Upon receiving this message, the MS requests the establishment of an RRC connection in Steps 42, 46, or 50 when the signal-to-noise ratio Ec/N0 that has been measured by way of the RRC connection is lower than the signal-to-noise ratio Ec/N0 that was transmitted in the SIB message, when the minimum level of the received signal code power (RSCP) that was measured in code is lower than the level of the received power that was transmitted in the SIB message, or when the distance between the mobile terminal and the broadcast source is greater than the distance set in advance by the network; respectively.

When any of the above-described conditions is realized, the network establishes an RRC connection in Steps 44, 48, or 52, respectively.

## Claims

1. An optimization process for radio resources allocated to an MBMS service (Multimedia Broadcast/Multicast Service) broadcast by a source to a group of mobile terminals located in a limited geographic zone that is covered by at least one cellular telecommunication network, **characterized in that** the optimization process comprises the steps of:
counting the mobile terminals present in said geographic zone,
defining a first criterion representing a minimum level of reception quality by the mobile terminals of the service broadcast in said geographic zone,
defining a second criterion representing a distance between the broadcast source and the mobile terminals for which a reception of the broadcast service is optimal;
establishing a signalization connection between the cellular telecommunication network and mobile terminals located in a broadcast zone that fulfill the first and second criteria; and
transmitting the MBMS service to said mobile terminals.

2. A process according to claim 1, **characterized in that** said signalization connection is used to count the mobile terminals of a broadcast zone.

3. The process according to claim 2, **characterized in that** the process further comprises the steps of:
fixing a percentage of mobile terminals that should receive the MBMS service;
broadcasting signals having a determined power level;
determining the percentage of mobile terminals that respond to signals that have been broadcast;
as long as a fixed percentage of mobile terminals has not been reached, reducing an emission power level; and
if the fixed percentage of mobile terminals has been reached, broadcasting the MBMS service at the emission power level that has been reached.

4. The process according to anyone of claims 1 to 3, **characterized in that** said cellular telecommunication network is a UMTS network.

5. The process according to claim 4, **characterized in that** the first criterion that represents the minimum level of reception quality is determined according to a minimum level of received signal code power (RSCP) measured by code indicated by said cellular telecommunication network.

6. The process according to claim 4, **characterized in that** the first criterion that represents the minimum level of reception quality is determined according to a signal-to-noise ratio Ec/N0 that is indicated by said cellular telecommunication network.

7. The process according to anyone of claims 1 to 3, **characterized in that** the said cellular telecommunication network is a GSM/GPRS network.

8. The process according to claim 7, **characterized in that** the first criterion that represents the minimum level of reception quality is determined according to a parameter (RX lev GSM).

9. A mobile terminal aimed at receiving an MBMS service broadcast by a source in a limited geographic zone that is covered by at least one cellular telecommunication network, **characterized in that** the mobile terminal comprises:
means for establishing connections with said cellular telecommunication network in the cases:
in which a reception quality level is below a minimum level defined by said cellular telecommunication network for said zone; and
in which a distance between the mobile terminal and the broadcast source is greater than a distance established in advance by said cellular telecommunication network.

10. The mobile terminal according to claim 9, **characterized in that** the mobile terminal establishes a connection with said cellular telecommunication network when a signal-to-noise Ec/N0 is lower than a level that has been set in advance by said cellular telecommunication network, or when a minimum level of received signal code power RSCP is lower than a preset value.
